(19) Europäisches Patentamt
European Patent Office
Office européen des brevets

(11) **EP 1 653 193 B1**

(12) **EUROPÄISCHE PATENTSCHRIFT**

(45) Veröffentlichungstag und Bekanntmachung des Hinweises auf die Patenterteilung:
**29.08.2007   Patentblatt 2007/35**

(51) Int Cl.:
**G01C 11/02** *(2006.01)*        **G06K 9/00** *(2006.01)*
**G06T 5/00** *(2006.01)*

(21) Anmeldenummer: **05023203.2**

(22) Anmeldetag: **25.10.2005**

(54) **Verfahren zur Eliminierung von Schatteneffekten in Fernerkundungsdaten über Land**

Method for elimination of shadow effects in remote sensing data over land

Procédé destiné à l élimination d'effets d'ombre dans des données de télédétection sur le terrain

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **29.10.2004   DE 102004052603**

(43) Veröffentlichungstag der Anmeldung:
**03.05.2006   Patentblatt 2006/18**

(73) Patentinhaber: **Deutsches Zentrum für Luft- und Raumfahrt e.V.**
**51147 Köln (DE)**

(72) Erfinder: **Richter, Rudolf Dr.**
**82234 Wessling (DE)**

(74) Vertreter: **von Kirschbaum, Albrecht**
**Patentanwalt**
**Postfach 1520**
**82102 Germering (DE)**

(56) Entgegenhaltungen:
- **IMAGING SPECTROMETRY VIII 8-10 JULY 2002 SEATTLE, WA, USA, Bd. 4816, 2002, Seiten 203-210, XP002365194 Proceedings of the SPIE - The International Society for Optical Engineering SPIE-Int. Soc. Opt. Eng USA ISSN: 0277-786X**
- **SHOU-PYNG SHU J ET AL: "CLOUD SHADOW REMOVAL FROM AERIAL PHOTOGRAPHS" PATTERN RECOGNITION, ELSEVIER, KIDLINGTON, GB, Bd. 23, Nr. 6, Januar 1990 (1990-01), Seiten 647-656, XP000142348 ISSN: 0031-3203**
- **RICHTER R ET AL: "DE-SHADOWING OF SATELLITE/AIRBORNE IMAGERY" INTERNATIONAL JOURNAL OF REMOTE SENSING, BASINGSTOKE, HANTS, GB, Bd. 26, Nr. 15, 10. August 2005 (2005-08-10), Seiten 3137-3148, XP008059216**

**Beschreibung**

Die Erfindung betrifft ein Verfahren zur Eliminierung von Schatteneffekten von Fernerkundungsdaten über Land.

Fernerkundungsdaten der Erdoberfläche, die von einem Sensor an Bord eines Satelliten oder Flugzeugs aufgenommen werden, enthalten oft Gebiete mit Wolken und Wolkenschatten. Information von Flächen unterhalb der Wolken können daher mit optischen Sensoren nicht gewonnen werden, da das Signal keine Komponente vom Erdboden enthält. Dagegen ist in Schattengebieten die bodenreflektierte Sonnenstrahlung immer ein kleines positives Signal, weil das gesamte Signal aus einem direkten ("beam irradiance") Sonnenanteil sowie einem diffusen Anteil (diffuse Himmelstrahlung, "diffuse skylight") besteht. Selbst wenn die direkte Sonneneinstrahlung in Schattenbereichen vollständig blockiert ist, bleibt der diffuse reflektierte Anteil bestehen. Daher kann eine Bestimmung des Bruchteils der direkten Sonneneinstrahlung verwendet werden, um diesen Beitrag rechnerisch zu kompensieren. Dieser Prozess wird Beseitigung von Schatteneffekten ("de-shadowing", "shadow removal") genannt.

In EP 1 091 188 A1 ist ein Verfahren zur Korrektur atmosphärischer Einflüsse in multispektralen optischen Fernerkundungsdaten beschrieben, welche als Rohdaten in Satelliten- oder Flugzeug-Sensoren zur satelliten- bzw. flugzeuggestützten Erdbeobachtung gewonnen werden. Bei diesem Verfahren wird eine Vorklassifizierung (DERA) der Rohdaten zur automatischen Erkennung vordefinierter Klassen und eine Korrekturrechnung (CORA) zur Umwandlung der unkorrigierten in korrigierte Reflektionsgrade am Erdboden einschließlich einer Einbeziehung aktueller Atmosphärendaten zur genauen Beschreibung des Atmosphärenzustandes kombiniert. Hierbei ermöglicht die Vorklassifizierung (DERA) eine genaue Korrekturrechnung (CORA) durch Erzeugung von notwendigem a-priori-Wissen. Dieses Verfahren kann bei der satelliten- oder flugzeuggestützen Fernerkundung der Erdoberfläche angewendet werden.

In der Literatur sind zwei prinzipielle Methoden zur Beseitigung von Wolkenschatten-Effekten bei Fernerkundungs-Bilddaten vorgeschlagen worden. Bei der ersten Methode werden geometrische Überlegungen benutzt, die Wolkenstruktur auf den Erdboden projiziert, die bekannte Sonnengeometrie einer Szene genutzt und die Wolkenhöhe zur Ableitung der Wolkenschattengebiete geschätzt (Simpson, J. J., and Stitt, J. R., 1998, A procedure for the detection and removal of cloud shadow from AVHRR data over land, IEEE Trans. Geoscience and Remote Sensing, 36, 880-897). Dieser Ansatz ist relativ rechenzeit-intensiv und wird hier nicht verfolgt. Ferner hat er noch zwei andere Nachteile:

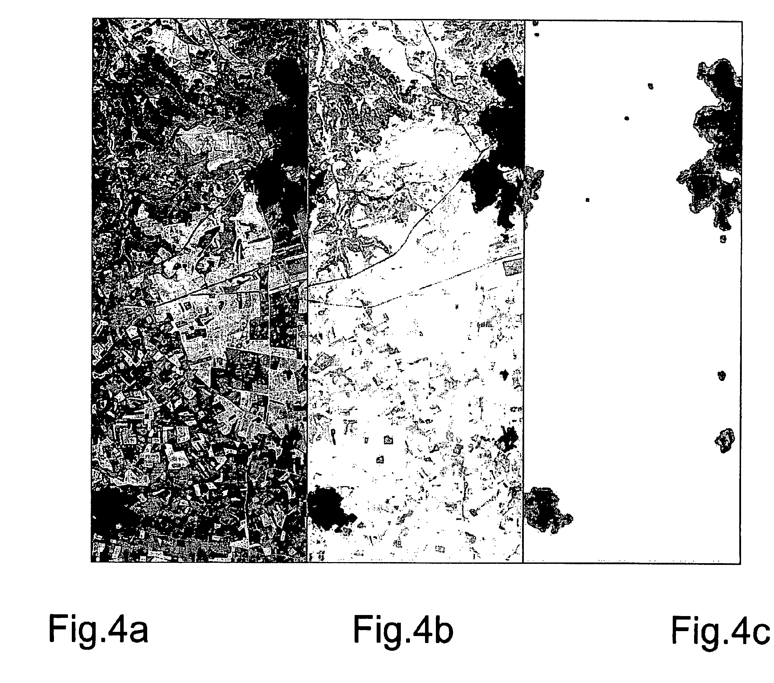

- er versagt, wenn sich die Wolken außerhalb der Szene befinden, was bei Szenen mit flugzeuggetragenen Sensoren passieren kann (siehe Fig.4a und 4b) und
- er kann nicht zur Korrektur von Gebäude-Schatten in einer Szene verwendet werden.

Bei der zweiten Methode werden rein spektrale Kriterien zur Korrektur von Schatteneffekten benutzt. Eine geläufige Technik nutzt das Konzept der spektralen "Endmember" (Boardman, J. W., 1993, Automated spectral unmixing of AVIRIS data using convex geometry concepts, Summaries of Fourth JPL Airborne Geoscience Workshop, JPL Publication 95-26, v.1, pp.11-14). Schatten wird als ein Endmember mit Reflexionsgrad Null definiert. Die Summe aller Endmember-Gewichte ist 1. Nach Entmischen wird bei der Eliminierung von Schatten der Reflexionsgrad geteilt durch eins minus die Summe der Gewichte der Nicht-Schatten Endmember. Problematisch ist die Wahl der spektralen Endmember.

Bei einer anderen Technik, die dieses Problem vermeidet, wird das "Matched Filter" Konzept benutzt (Adler-Golden, S.M., et al. 2002, An algorithm for de-shadowing spectral imagery, Proc. 11th JPL Airborne Earth Science Workshop, JPL-Publication 03-04, Pasadena, U.S.A.); dieser Filter wird über die Kovarianzmatrix der atmosphärisch korrigierten Reflexionsgrad-Daten berechnet. Dieses Verfahren ist wohl derzeit das beste und wird hier als "Standardverfahren" bezeichnet.

Bei dem "Matched-Filter"-Konzept wird ein Bruchteil der direkten Sonnenstrahlung für jedes Bild-Pixel bestimmt. In einer wolkenfreien Szene empfängt jedes Bildelement diffuse und direkte Sonnenstrahlung, welche entsprechend den Eigenschaften der Fläche reflektiert wird. Bei partiellem oder vollständigem Schatten ist der Anteil an direkter Sonneneinstrahlung auf einen gewissen Bruchteil reduziert oder Null. Der Anteil des reflektierten diffusen Sonnenlichtes bleibt dagegen stets vorhanden.

Mit einem Schatten-Algorithmus wird nun der Bruchteil der direkten Sonneneinstrahlung bestimmt und es kann dann eine entsprechende Kompensation der Helligkeit der Szene in Schattenbereichen vorgenommen werden. Bei dem StandardVerfahren wird für jedes Pixel der Szene der Bruchteil der direkten Sonneneinstrahlung berechnet. Da das "Matched-Filter" jedoch kein perfektes Filter ist, um Schatten-Pixel zu bestimmen, wird für viele Bereiche einer Szene eine Fehlklassifizierung erhalten.

Das "Matched Filter" Konzept ist auch in anderen technischen Disziplinen, z.B. der Informationstechnologie und der Signalverarbeitung, erfolgreich angewendet worden.

Das Standardverfahren von Adler-Golden et al. ist wohl die zur Zeit beste rein spektrale Methode zur Beseitigung von Schatteneffekten. Das Verfahren weist folgende wesentlichen Schritte auf:

1. Berechnen des Bodenreflexionsgrades, d.h. es wird eine atmosphärische Korrektur der Szene durchgeführt.

2.Berechnen der Kovarianzmatrix und des "Matched Filter" Vektors für Schatten-Pixel, wobei der Filter für ein Objekt (Target) mit Reflexionsgrad Null angesetzt wird.

3.Iteration der unskalierten Schatten-Funktion, Verwenden zweier empirischer Parameter (c, N), um eine physikalische Skalierung (skalierte Schattenfunktion) zu erreichen.

4. Kompensieren des Schatteneffektes für alle Bild-Elemente.

Aufgabe der Erfindung ist es, Wolken-, Gelände- und Gebäudeschatten in Fernerkundungsdaten über Land insoweit zu beseitigen, dass eine Szene wie unter klaren Aufnahmebedingungen erscheint.

Gemäß der Erfindung ist diese Aufgabe bei einem Verfahren zur Eliminierung von Schattenbereichen in Fernerkundungsdaten über Land durch die Merkmale im Patentanspruch gelöst.

Das erfindungsgemäße Verfahren kann für multispektrale und hyperspektrale Fernerkundungs-Bilddaten angewendet werden. Bei dem erfindungsgemäßen Verfahren wird zumindest ein Spektralkanal im sichtbaren Bereich des Spektrums von 0,4 bis 0,7 $\mu$m und ein Kanal im nahen Infrarot von 0,8 bis 1 $\mu$m benötigt. Die Ergebnisse sind jedoch deutlich besser, wenn jeweils noch ein Kanal aus dem 1,6 $\mu$m und 2,2 $\mu$m Bereich zur Verfügung steht. Bei dem Verfahren gemäß der Erfindung entsprechen die ersten beiden Schritte dem Standardverfahren und werden auch so benutzt wie bei dem Standardverfahren.

Bei den nächsten Schritten des erfindungsgemäßen Verfahrens wird aus der unskalierten Schatten-Funktion auf andere Weise die skalierte Schatten-Funktion berechnet, wobei deren Werte den physikalischen Bruchteil der direkten Strahlung angeben, und somit in einem Intervall von 0 bis 1 liegen. Als wesentlicher Schritt wird gemäß der Erfindung nun mit Hilfe eines Histogramms der unskalierten Schatten-Funktion ein Schwellwert zur Definition von Kern-Schatten-Gebieten durchgeführt. Danach werden diese Kern-Gebiete expandiert, um einen fließenden Übergang von Schatten-Bereichen zu klaren Bereichen zu erzielen. Schließlich werden nur die Bild-Pixel in den expandierten Kern-Gebieten bezüglich der Schatteneffekte korrigiert, und somit potentielle Schatten-Fehlklassifizierungen über das ganze Bild deutlich verringert bzw. minimiert.

Das erfindungsgemäße Verfahren arbeitet vollautomatisch, kann aber auch durch zwei Parameter gesteuert werden, nämlich die maximale "Tiefe" des Schattens und die Größe der Kern-Schattenbereiche.

Nachfolgend wird die Erfindung anhand der Zeichnungen im einzelnen beschrieben. Es zeigen:

Fig.1                  in einem Flussdiagramm die einzelnen Prozessierungsschritte zur Eliminierung von Schatten;

Fig.2                  Graphen von einem direkten zu einem gesamten (direkten und diffusen) solaren Strahlungsfluss für zwei Sichtweiten;

Fig.3                  ein normiertes Histogramm einer unskalierten Schatten-Funktion;

Fig.4a                 Boden-Reflektionsgrad für eine HyMap-Szene bei Chinchon, Spanien;

Fig.4b                 eine Standard-Schatten-Maske und

Fig.4c                 eine von Kern-Schatten-Gebieten abgeleitete Maske;

Fig.5a bis 5c          einen Detail-Ausschnitt aus dem Bild in Fig.4a, wobei in Fig.5a der Reflexionsgrad bei Annahme einer vollen solaren Beleuchtung, in Fig.5b der Reflexionsgrad nach Eliminierung der Schattenbereiche gemäß dem erfindungsgemäßen Verfahren und in Fig.5c das Ergebnis der Standard-Methode zur Beseitigung von Schatteneffekten wiedergegeben sind;

Fig.6a bis 6c          eine Landsat ETM+ Teilszene aus Kenia und zwar Fig.6a eine Übersicht, Fig.6b und Fig.6c ein Detailbild vor bzw. nach Beseitigung der Schattenbereiche;

Fig.7                  ein Vegetationsspektrum aus Fig.6 vor (unterer Graph) und nach Eliminierung des Schatten-Effektes (oberer Graph);

Fig.8a                 und 8b Landsat ETM+ Teilszene von Deutschland und zwar Fig.8a vor einer Korrektur der Schatteneffekte und Fig.8b nach deren Korrektur, und

Fig.9a und 9b          einen Ausschnitt einer Ikonos Szene von München, und zwar in Fig.9a die originale Szene und in Fig. 9b dieselbe Szene nach einer Schatten-Korrektur.

Nach einer detaillierten Beschreibung des erfindungsgemäßen Verfahrens werden einige Beispiele einer Prozessierung von Schatten-Szenen wiedergegeben und erläutert. Das erfindungsgemäße Verfahren ist auf Land-Szenen beschränkt; Schattenbereiche über Wasserflächen können nicht korrigiert werden. Eine weitere Beschränkung besteht darin, dass die Wolkenbedeckung der Szene unter 25% liegen muss. Dies ist jedoch in der Praxis kein großer Nachteil, da Szenen mit einem großen Prozentsatz an Wolkenbedeckung im allgemeinen nicht angeboten werden.

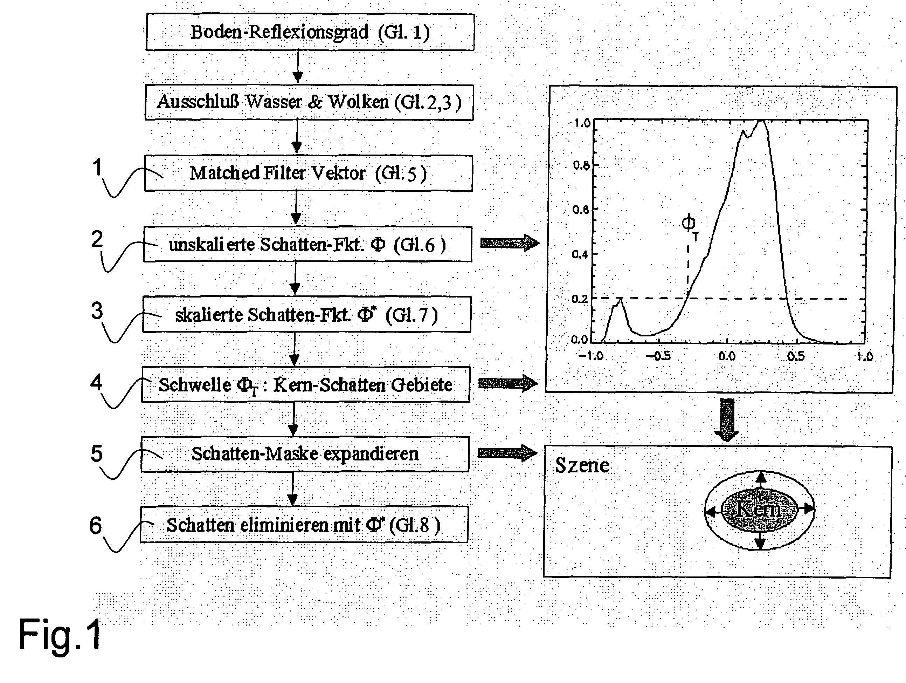

Wie dem Ablaufdiagramm in Fig.1 zu entnehmen ist, weist das erfindungsgemäße Verfahren insgesamt acht Schritte der Prozessierung auf. Zuerst wird der Oberflächen-Reflexionsgrades $\rho$ einer Fernerkundungs-Szene berechnet, wobei für den Schatten-Algorithmus zunächst nur drei Kanäle benötigt werden; am Ende werden jedoch alle Spektralkanäle korrigiert. Der Oberflächen-Reflexionsrad $\rho_i = \rho (\lambda_i)$ wird in den drei Kanälen (Wellenlängen $\lambda_i$ = 0,85, 1,6, und 2,2 $\mu m$) mit Hilfe eines atmosphärischen Korrekturverfahrens berechnet. In den folgenden Prozessierungsbeispielen werden dazu Verfahren von Richter benutzt nämlich Richter, R., 1996, A spatially adaptive fast atmospheric correction algorithm, Int. J. Remote Sensing, 17, 1201-1214 und/oder Richter, R., 1997, Correction of atmospheric and topographic effects for high spatial resolution satellite imagery, INT. J. Remote Sensing, 18, 1099-1111.

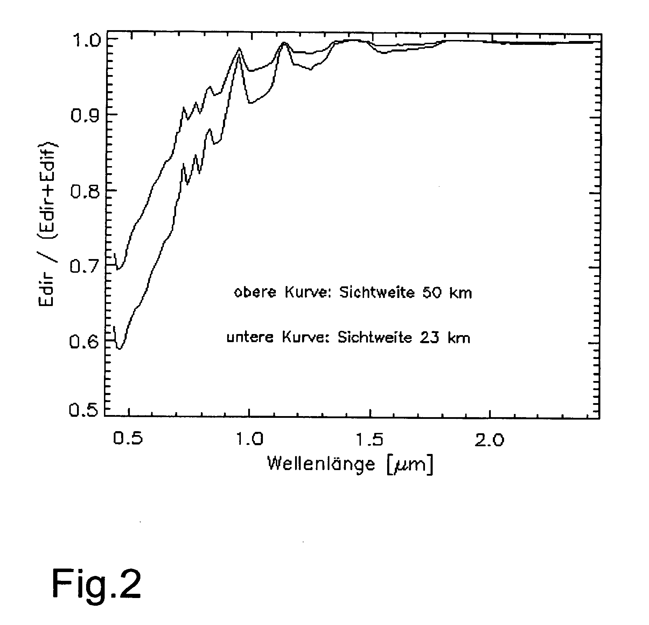

Die gewählten Spektralkanäle im nahen und kurzwelligen Infrarot sind sehr empfindlich bezüglich Wolkenschatten-Effekten, weil der direkte Anteil der solaren Strahlung auf die Erdoberfläche typischerweise etwa 80% oder mehr des gesamten Strahlungsflusses ist (siehe Fig.2). Kanäle im rotblauen Bereich des Spektrums (0,4 bis 0,7 $\mu m$) werden nicht für die Detektion von Schatten verwendet, weil sie einen wesentlich größeren Anteil an diffuser Strahlung empfangen und somit nicht so empfindlich gegenüber partiellem Schatten sind. Ein Kanal aus dem sichtbaren Bereich wird allerdings benötigt, um Wolken bei der Histogramm-Berechnung auszuschließen.

Der Oberflächen-Reflexionsgrad wird bei der atmosphärischen Korrektur zunächst berechnet unter der Annahme einer vollen solaren Einstrahlung, d.h. der globale Strahlungsfluss auf den Erdboden besteht aus einer direkten ($E_{dir}$) und einer diffusen ($E_{dif}$) Komponente. Wird mit DN (digital number) der Grauwert eines Bildpixels, mit $L_p$ das gestreute Luftlicht ("path radiance") und mit $\tau$ der Transmissionsgrad der Atmosphäre auf dem Weg vom Erdboden zum Sensor bezeichnet, so kann der Boden-Reflexionsgrad $\rho_i$ (gemäß Richter 1997) berechnet werden:

$$\rho_i(x,y) = \frac{\pi \left( d^2 \left\{ c_0(i) + c_1(i)DN_i(x,y) \right\} - L_{p,i} \right)}{\tau_i \left( E_{dir,i} + E_{dif,i} \right)} \qquad (1)$$

Hierbei sind mit d der Abstand Erde-Sonne zur Aufnahmezeit des Bildes in astronomischen Einheiten, mit $c_0$ und $c_1$ die radiometrischen Kalibrier-Koeffizienten, um die Grauwerte DN in die entsprechende Strahldichte L am Sensor umzurechnen, d.h. $L = c_0 + c_1$ DN, und mit i der Kanal-Index bezeichnet.

Einer der wichtigsten Parameter ist die Anzahl der spektralen Kanäle während der Berechnung der Kovarianz-Matrix und dem anschließenden Matched-Filter Teil (Schritt 1 des erfindungsgemäßen Verfahrens, siehe Ablaufdiagramm in Fig.1). Die minimale Anforderung bei dem hier vorgestellten Verfahren ist ein Kanal im nahen Infrarot (0,8 bis 1 $\mu m$). Die Ergebnisse werden im allgemeinen signifikant besser, wenn zusätzlich je ein Kanal aus dem 1,6 $\mu m$ und 2,2 $\mu m$ Spektralbereich zur Verfügung steht. Auch für hyperspektrale Bilddaten (mit hundert oder mehr Kanälen) sind diese drei Kanäle (um 0,85, 1,6, 2,2 $\mu m$) für die Matched-Filter-Berechnung ausreichend. Eine Berechnung mit hundert oder mehr Kanälen würde nur zu numerischen Problemen bei der Inversion der Kovarianz-Matrix führen.

Der nächste Schritt ist die Maskierung der Wasserflächen und Wolkengebiete. Spektralkanäle aus dem sichtbaren Spektrum werden nur für die Maskierung von Wolkengebieten verwendet, nicht für den "Matched-Filter" Teil. Der Grund liegt darin, dass Wasser, Vegetation, und dunkle Böden im spektralen Reflexionsgrad nahe beieinander liegen. Zusätzlich ist der sichtbare Spektralbereich nicht sehr empfindlich bezüglich partiellem Schatten, d.h. partielle direkte solare Einstrahlung (siehe Fig.2). Das Bild in Fig.2 zeigt im sichtbaren Spektrum (0,4 bis 0,7 $\mu m$) ein deutlich niedrigeres Signal der direkten solaren Einstrahlung, was eine entsprechend hohe diffuse Einstrahlung impliziert.

Die Unterscheidung von Wasserflächen von Schattengebieten kann schwierig oder unmöglich sein, falls nur die Kriterien von dem spektralen Reflexionsgrad-Verlauf verwendet werden. Wasserkörper sollten soweit wie möglich vom Schatten-Algorithmus ausgeschlossen werden, da sie stets als Schatten eingeordnet werden, und somit eine Fehlklassifikation bedeuten. Bei einer Schattenkorrektur werden nicht ausgeschlossene Wasserflächen stets überkorrigiert und erscheinen als helle Flächen. In dem hier vorgeschlagenen Verfahren werden Wasser und Wolken-Pixel mit spektralen Kriterien maskiert und von dem Schatten-Algorithmus ausgeschlossen.

$$\rho(0,48~\mu m) \geq 30\%~\text{und}~\rho(1,6~\mu m) \geq 30\%~(\text{Wolken}) \qquad (2)$$

$$\rho(0,85\ \mu m) \le 5\% \ und \ \rho(1,6\ \mu m) \le 1\ \% \quad (Wasser) \qquad (3)$$

Falls kein Kanal im blauen Spektrum zur Verfügung steht, kann ein Kanal im grünen (0,5-0,6 $\mu$m) oder roten Bereich (0,6 - 0,68 $\mu$m) als Ersatz verwendet werden. Beide Kriterien (2) und (3) definieren die entsprechende Klasse nicht eindeutig, liefern aber für die meisten Szenen gute Ergebnisse. Da das vorgeschlagene Verfahren vollautomatisch ablaufen kann, muss ein gewisser Prozentsatz an Falschklassifikation toleriert werden.

Beim Schritt (1)wird die Kovarianz-Matrix $C(\rho')$ berechnet, wobei mit $\rho'$ der Reflexions-Vektor bezeichnet ist, der nur aus den Bildpixeln besteht, die nicht als Wasser und nicht als Wolke klassifiziert sind. Für jedes Pixel enthält dieser Vektor die Reflexionsgrade in ausgewählten drei Kanälen (0,85, 1,6, 2,2 $\mu$m) . Der "Matched Filter" $V_{mf}$ ist ein Vektor, der auf ein bestimmtes Target-Spektrum $\rho'_T$ abgestimmt ist, welches nach Adler-Golden et al. detektiert werden soll als:

$$V_{mf} = \frac{C^{-1}(\rho'_T - \bar{\rho}')}{(\rho'_T - \bar{\rho}')^T C^{-1}(\rho'_T - \bar{\rho}')} \qquad (4)$$

Wobei mit $C^{-1}$ die invertierte Kovarianzmatrix bezeichnet ist und $\bar{\rho}'$ das arithmetisch gemittelte Spektrum der Szene ist, allerdings ohne die zuvor berechneten Wasser/Wolken-Pixel. Setzt man $\rho'_T = 0$ für ein Schatten-Target, so erhält man die spezielle vereinfachte Form des "Matched Filters" $V_{sh}$,

$$V_{sh} = -\frac{C^{-1}\bar{\rho}'}{\bar{\rho}'^T C^{-1}\bar{\rho}'} \qquad (5)$$

wobei der Index '$sh$' Schatten ("shadow") symbolisiert, und $\bar{\rho}'^T$ der transponierte Vektor $\bar{\rho}'$ ist.

Der Schatten-Matched-Filter Vektor wird nun auf den Nicht-Wasser/Nicht-Wolken Teil der Szene angewendet und ergibt die noch unnormierten Werte $\Phi$, die ein relatives Maß des Bruchteils der direkten solaren Einstrahlung sind. Die Funktion $\Phi$ wird hier als *unskalierte Schatten-Funktion* bezeichnet.

$$\Phi(x,y) = V_{sh}^T\left(\rho'(x,y) - \bar{\rho}'\right) \qquad (6)$$

Das Matched-Filter berechnet die minimale mittlere quadratische Abweichung des Schattenanteils für die gesamte Szene (ohne Wasser/Wolken). Daher sind die Werte von $\Phi$ positiv und negativ. Dieser willkürliche, szenen-abhängige Wertebereich von $\Phi$ muss nun in den physikalischen Bereich von 0 bis 1 umskaliert werden, wobei 0 keine direkte solare Einstrahlung bedeutet (voller Schatten), und 1 volle direkte Einstrahlung bedeutet. Dazu wird das Histogramm von $\Phi$ verwendet, wobei die maximale Häufigkeit des Histogramms auf 1 normiert wird.

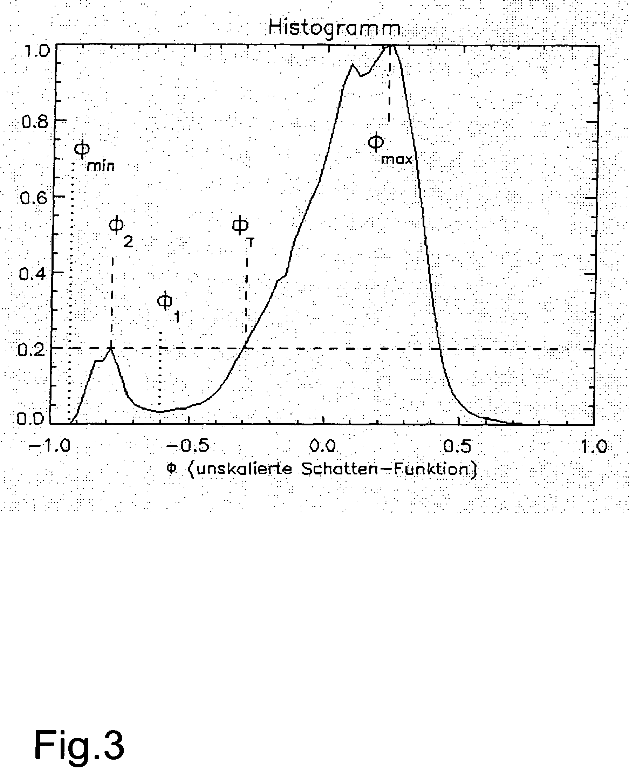

Es wird nun angenommen, dass die Stelle des Hauptmaximums bei $\Phi_{max}$ die volle direkte Einstrahlung repräsentiert (siehe Fig.3). Der Grund für diese Annahme ist, dass im statistischen Mittel die volle direkte Einstrahlung bereits für Flächen mit der durchschnittlichen Szenenhelligkeit erreicht wird. Dann werden die Werte von $\Phi$ linear umskaliert vom Bereich ($\Phi_{min}$, $\Phi_{max}$) in das physikalisch skalierte Intervall (0,1), wobei die *skalierte Schatten-Funktion* mit $\Phi^*$ bezeichnet wird

$$\Phi^* = \frac{\Phi - \Phi_{min}}{\Phi_{max} - \Phi_{min}} \quad ,wenn \quad \Phi \le \Phi_{max} \qquad (7a)$$

$$\Phi^* = 1 \quad ,wenn \quad \Phi > \Phi_{max}\,; \qquad (7b)$$

Der kleinste Wert der skalierten Schatten-Funktion ist $\phi_{min}^{*}$ = 0, d.h. keine direkte solare Einstrahlung. Allerdings ist es aus zwei Gründen ratsam, $\phi_{min}^{*}$ nicht auf Null zu setzen, sondern einen kleinen positiven Wert zu verwenden, nämlich erstens, um eine Überkorrektur zu vermeiden und zweitens, um auch Szenen zu prozessieren, die nur Gebiete mit partiellem Schatten enthalten. Der Wert $\phi_{min}^{*}$, also der kleinste Bruchteil an direkter Beleuchtung in einer Szene, oder der tiefste Schatten, ist szenenabhängig, und liegt typischerweise zwischen 0,05 und 0,10.

Im Prinzip könnte nun mit der physikalisch skalierten Funktion $\Phi^*$ der Schatteneffekt beseitigt werden, und zwar für jeden Bildpunkt mit Ausnahme von Wasser- und Wolkenflächen. Wie vorstehend schon erwähnt, ist das "Matched-Filter" aber keine perfekte Transformation.

Als nächster wichtiger Schritt ist daher gemäß der Erfindung vorgesehen, sogenannte Kern-Schatten-Gebiete zu definieren, welche nachfolgend expandiert werden, um einen fließenden Übergang zu den klaren Gebieten zu erhalten. Bei Anwendung von $\Phi^*$ auf diese Bereiche wird die Zahl der Falschklassifizierungen von Schattenpixeln deutlich reduziert (siehe Fig.4c). Falls dieser Schritt nicht durchgeführt wird, wie in dem Standardverfahren, werden seltsame "Schattenpixel" überall im Bild verstreut erhalten (siehe Fig.4b), wo graue Bereiche Artifakte darstellen, also falsch klassifizierte Schattenbereiche sind.

Das Histogramm der unskalierten Schatten-Funktion $\Phi$ wird verwendet, um Gebiete mit niedrigen $\Phi$-Werten von mittleren bis hohen $\Phi$-Werten zu trennen (siehe Fig.3). Dazu kann ein Schwellwert $\Phi_T$ in der Nachbarschaft des lokalen Histogramm-Minimums ($\Phi_1$) gesetzt werden und die Kern-Schatten-Maske wird definiert durch Pixel mit $\Phi(x,y) < \Phi_T$.

Weil die skalierte Schatten-Karte $\Phi^*(x,y)$ auch als Datei zur Verfügung gestellt wird, könnte diese Karte von einem Nutzer in Bereichen mit Fehlklassifikation modifiziert werden, und die weitere Berechnung mit dieser neuen Schatten-Karte vorgenommen werden (interaktive Option).

Das Histogramm der unskalierten Schatten-Funktion $\Phi$ (Fig.3) hat typischerweise ein Hauptmaximum (bei $\Phi_{max}$), ein kleineres Nebenmaximum (bei $\Phi_2$) aufgrund der SchattenPixel, und ein lokales Minimum (bei $\Phi_1$). Das Nebenmaximum kann durch horizontale Schnitte bestimmt werden (siehe die gestrichelte horizontale Linie in Fig.3). Der Schwellwert $\Phi_T$ wird als Schnittpunkt dieser Line (Höhe des Nebenmaximums) mit der Histogramm-Kurve h($\Phi$) definiert, wobei $\Phi_1 < \Phi < \Phi_{max}$, (siehe Fig.3). Dieses Vorgehen ist beschränkt auf Szenen, wo der Prozentsatz von Schattenpixeln kleiner als etwa 25% ist. Dies ist bei Satelliten-Szenen meist keine starke Einschränkung, da Szenen mit einer Wolkenbedeckung > 25% nur selten angeboten und verkauft werden.

Falls das lokale Nebenmaximum bei $\Phi_2$ numerisch nicht klar genug definiert ist, d.h. kein lokales Minimum bei $\Phi_1$ gefunden werden kann, oder die Histogramm-Differenz h($\Phi_2$) - h($\Phi_1$) < 0,03 ist, dann wird $\Phi_T$ definiert als Schnittpunkt des Histogramms mit der Niveau-Linie 0,10 im Bereich für h($\Phi$) für $\Phi < \Phi_{max}$.

Der Prozess der Maskierung der Kern-Schatten-Gebiete mit $\Phi < \Phi_T$ ist kritisch und beinhaltet auch eine gewisse Willkür wie jedes Schwellwert-Kriterium. Ein zu hoher Schwellwert könnte Nicht-Schatten-Gebiete einbeziehen, ein zu niedriger Wert könnte Schattengebiete übersehen. Diese Problematik wird beim vorstehend beschriebenen Verfahren durch drei repräsentative Fälle flexibel gehandhabt: es kann eine kleine, mittlere, oder große Schatten-maske generiert werden, entsprechend den drei Schwellwerten $\Phi_T$ - 0,1, $\Phi_T$ und $\Phi_T$ + 0,1. Die Voreinstellung für den vollautomatischen Algorithmus ist die mittelgroße Schattenmaske.

Sobald die Kern-Schatten-Maske definiert ist, wird sie beispielsweise um 100m expandiert, um einen fließenden Übergang von Schattenbereichen zu klaren Gebieten zu erzielen. Die Kompensation des Schatteneffektes wird nun nur in den Bereichen der expandierten Maske mit der skalierten Schatten-Funktion $\Phi^*$ durchgeführt. Das bedeutet, die direkte solare Einstrahlung ($E_{dir}$ Term aus Gl.(1)) muss multipliziert werden mit $\Phi^*(x,y)$

$$\rho_i(x,y) = \frac{\pi\left(d^2\left\{c_0(i) + c_1(i)DN_i(x,y)\right\} - L_{p,i}\right)}{\tau_i\left(E_{dir,i}\,\Phi^*(x,y) + E_{dif,i}\right)} \qquad (8)$$

Ein zweiter einstellbarer Parameter ist der kleinste Bruchteil der direkten solaren Einstrahlung in einer Szene $\phi_{min}^{*}$. Theoretisch kann $\phi_{min}^{*}$ gleich Null sein, d.h. ein Bildelement ist vollständig im Schatten und empfängt nur diffuse solare Einstrahlung. Ein zu niedriger Wert führt allerdings zur Überkorrektur der Oberflächen-Reflexionsgrade. Besonders anfällig ist der Spektralbereich von 1,5 bis 2,5 $\mu$m, da hier der diffuse Anteil $E_{dif}$ sehr klein ist. Da die direkte Einstrahlung $E_{dir}$ im Nenner von Gl. (8) steht, führt ein zu kleiner Wert zu einem zu großen Reflexionsgrad, d.h. die entsprechende Fläche wird zu hell. Typischerweise liegt $\phi_{min}^{*}$ im Bereich von 0,05 bis 0,1, wobei der voreingestellte Wert für den vollautomatischen Algorithmus bei 0,08 gewählt wurde.

Ein dritter einstellbarer Parameter ist $\Phi_{max}$ in G1. (7a) und Gl.(7b), der nicht unbedingt mit dem Maximum des Histogramms in Fig.3 übereinstimmen muss, sondern in der Nähe des Histogramm-Maximums liegt, und somit ein Parameter bei interaktiver Optimierung sein kann.

Das vorstehend beschriebene Verfahren wurde unter verschiedenen Klimabedingungen und Landnutzungsbereichen erfolgreich für eine größere Anzahl von Szenen getestet. Die Ergebnisse von vier typischen Anwendungsbeispielen werden nachstehend anhand von Fig.4 bis Fig.9 erläutert.

Die vier im folgenden beschriebenen Beispiele zeigen die mit dem erfindungsgemäßen Verfahren erzielten Ergebnisse unter verschiedenen klimatischen Bedingungen und Landnutzungen, nämlich ein semi-arides Klima in Spanien, eine Gegend mit tropischem Regenwald in Afrika, eine landwirtschaftlich genutzte Gegend in Mecklenburg und einen Ausschnitt einer Szene von München.

Als erstes Beispiel ist in Fig.4a eine hyperspektrale Szene aus Spanien wiedergegeben, die mit einem flugzeuggetragenen Sensor aufgenommen wurde. Dies ist ein Beispiel, wo alle Wolken außerhalb der Szene liegen. Ein Schatten-Algorithmus, der auf der geometrischen Projektion von Wolkenstrukturen beruht, würde hier fehlschlagen.

Das Bild in Fig.4a wurde mit dem HyMap-Sensor aufgenommen. Es zeigt eine Teilszene von 1250 Scanzeilen aus der Gegend von Chinchon, Spanien, aufgenommen am 12. Juli 2003 um 12:10 h UTC. Die geographischen Koordinaten sind Breitengrad 40° 3' Nord, Längengrad 3° 21' West. Die Flughöhe war 4 km, Flugrichtung 196°, der solare Zenitwinkel war 18.3°, der Azimutwinkel 173.5°. Das HyMap Instrument überdeckt den Spektralbereich 0,45 - 2,45 $\mu$m mit 126 Kanälen.

Fig.4a zeigt die Szene als atmosphärisch korrigierte Daten des Boden-Reflexionsgrades vor der Schattenkorrektur. In Fig.4b ist eine Schatten-Karte nach der Standard-Methode (Adler-Golden et al.) dargestellt. Es ist offensichtlich, dass diese Karte viele falsch klassifizierte Schattenpixel enthält, besonders deutlich erkennbar bei Straßen und Feldgrenzen, aber auch in flächenhaften Bereichen. In Fig.4c ist die Schattenkarte nach dem erfindungsgemäßen Verfahren wiedergegeben. Diese Karte enthält auch einige kleinere Bereiche mit Fehlklassifizierungen, aber deutlich weniger falsch eingestufte Schattenpixel. Die wesentlichen Schattenbereiche sind gut dargestellt.

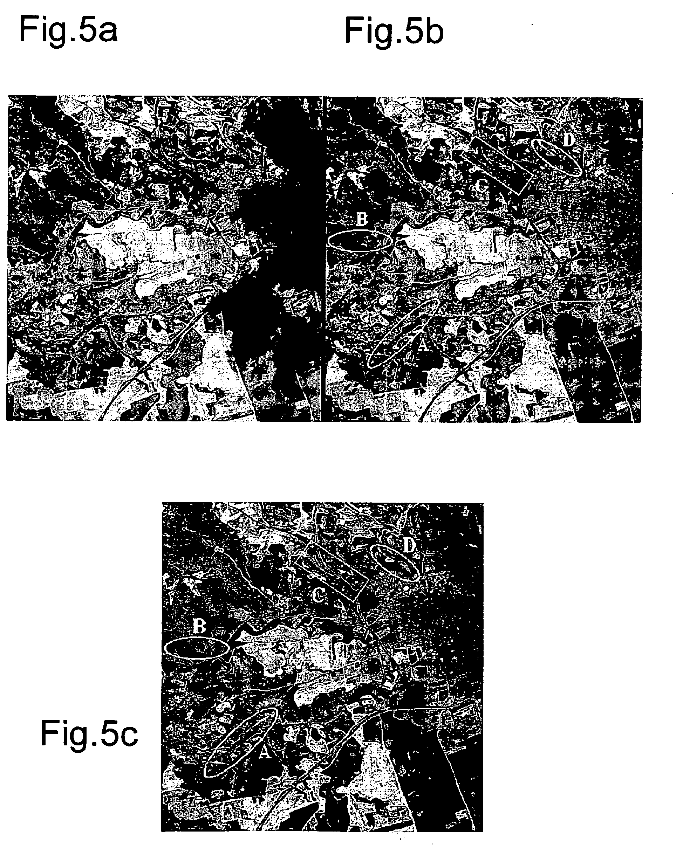

In Fig.5a bis 5c ist ein vergrößerter Ausschnitt aus dem oberen Teil der Fig.4a wiedergegeben, und zwar repräsentiert Fig.5a die Ergebnisse vor einer Anwendung des Schatten-Algorithmus und Fig.5b die mit dem erfindungsgemäßen Verfahren erzielten Ergebnisse. Fig.5c zeigt die Ergebnisse bei Anwendung der Standardmethode.

Ein Vergleich zeigt sofort die bessere Qualität der mit dem erfindungsgemäßen Verfahrens erzielten Ergebnisse mit den Kern-Schatten-Gebieten durch Vergleichen der markierten Gebiete A, B, C, D sowie die dunkleren Schattenbereiche. Die markierten Bereiche zeigen Beispiele von Flächen, wo die Standard-Methode fälschlicherweise Schattenpixel aufweist (siehe Fig.4b und 4c), welche bei Anwenden der erfindungsgemäßen Verfahrens nicht mehr auftauchen.

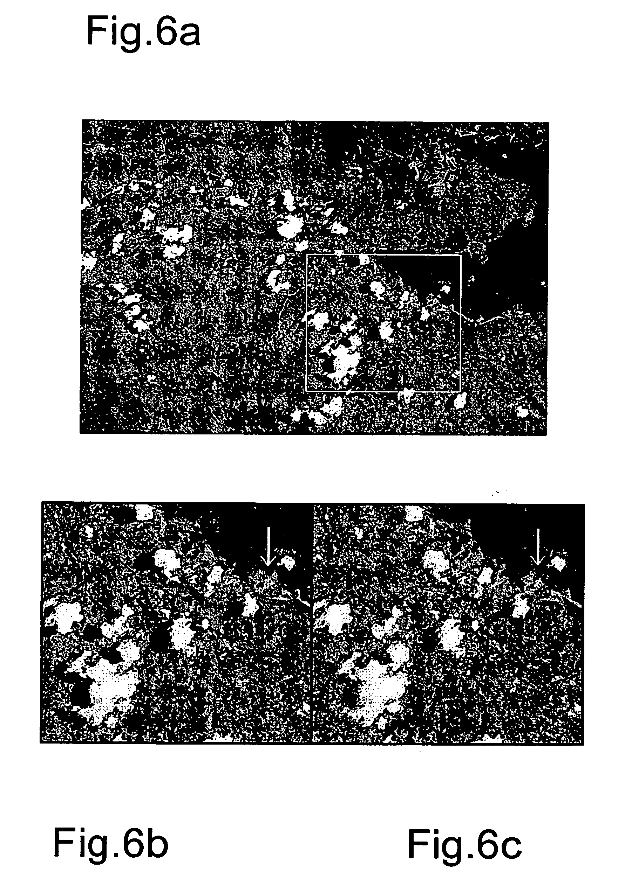

Die zweite Szene in Fig.6a zeigt einen Teil eines Landsat-7 ETM+ Satellitenbildes aus West-Kenia (Landsat Kennzeichnung path/row=170/60). Die geographischen Koordinaten sind 0° 13' Nord, 34° 37' Ost. Die Szene wurde am 10. April 2001 aufgenommen; sie besteht zum großen Teil aus tropischem Regenwald. Der solare Zenitwinkel ist 30.7°, der Azimutwinkel 74,2°. Fig.6a zeigt einen Überblick; in Fig.6b und 6c ist eine vergrößerte Ansicht mit atmosphärisch korrigierten Reflexionswerten vor (Fig.6b) und nach Anwendung des erfindungsgemäßen Schatten-Verfahrens (Fig.6c) wiedergegeben.

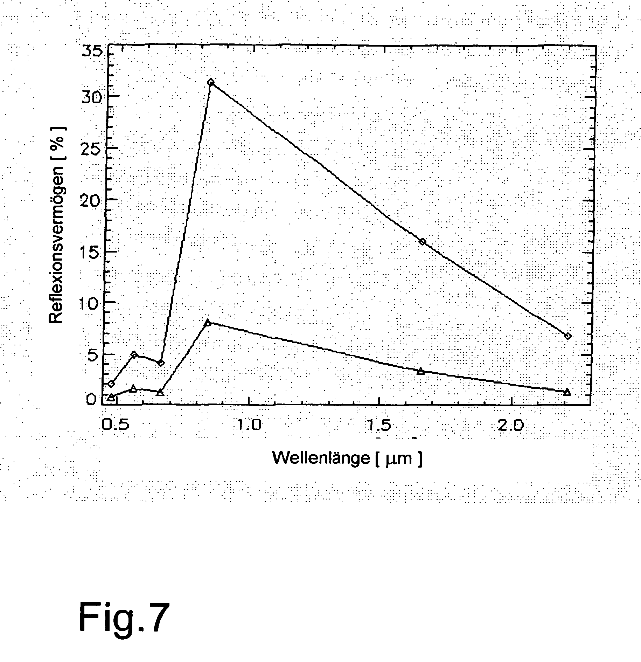

In Fig.7 sind Spektren aus dem mit einem Pfeil in Fig.6b und 6c markierten Gebiet wiedergegeben. Hierbei repräsentiert die untere Kurve das Waldspektrum vor Anwendung des Schatten-Algorithmus, also unter Annahme einer vollen solaren Einstrahlung, während die obere Kurve das Waldspektrum nach der Anwendung des Schatten-Algorithmus wiedergibt. Die obere Kurve entspricht typischen Spektren eines tropischen Regenwaldes aus dieser Gegend.

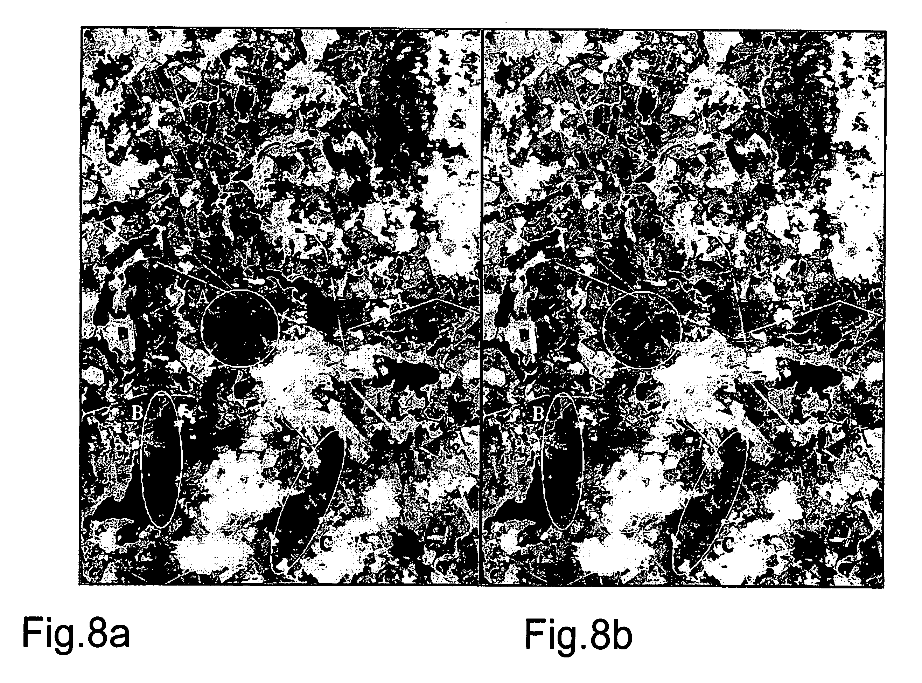

Das dritte Beispiel in Fig.8a zeigt einen Ausschnitt einer Landsat-7 ETM+ Szene aus Mecklenburg, aufgenommen am 1. Mai 2000 (Landsat-Bezeichnung path/row=194/23). Die Sonnengeometrie ist: Zenitwinkel 41°, Azimutwinkel 154.9°. Diese Gegend wird zum großen Teil landwirtschaftlich genutzt und hat viele Seen verschiedenster Größe. Die Wolkenbedeckung ist ca. 20%.

Die Anwendung des Schatten-Algorithmus in dieser Szene ist besonders schwierig, da die Seen oft trübe sind, oder Schilf-Gebiete enthalten, so dass sie leicht mit dunklem Boden verwechselt werden können. Dennoch sind viele wahre Landoberflächen-Details in der korrigierten Szene zu erkennen (siehe hierzu die markierten Flächen A, B, C in Fig.8b, die in der unkorrigierten Szene in Fig.8a verborgen sind.

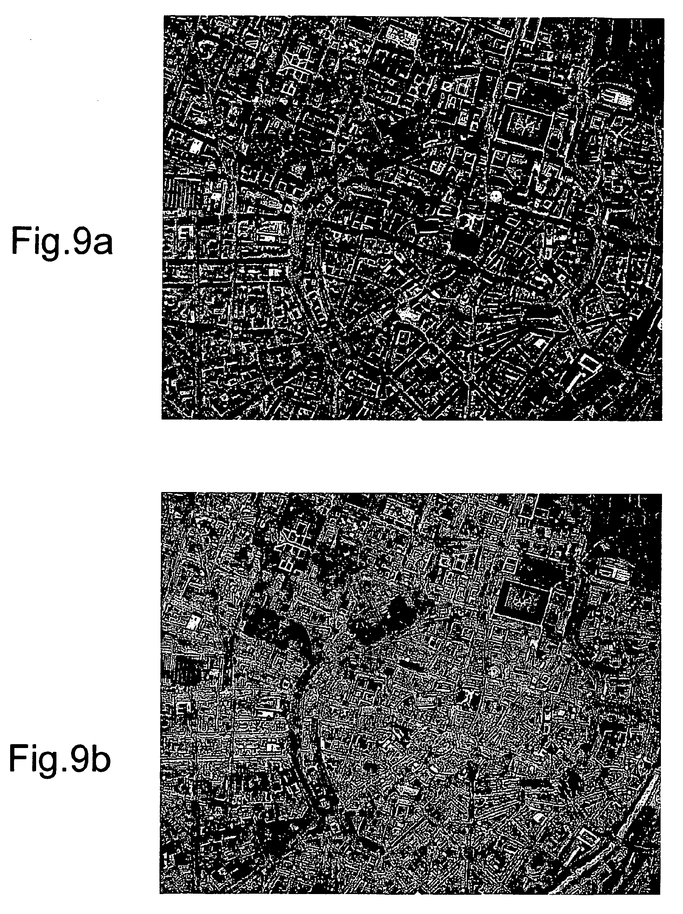

Das vierte Beispiel in Fig.9a zeigt einen Ausschnitt einer München-Szene, die von dem Satellitensensor Ikonos-2 am 17. September 2003 aus einem 600 km Orbit aufgenommen wurde. Der solare Zenitwinkel ist 46.3°, Azimutwinkel 167,3°. Dieser Sensor hat vier multispektrale Kanäle in den Spektralbereichen blau (480 nm), grün (570 nm), rot (660 nm), und nah-infrarot (840 nm). Die hohe räumliche Auflösung von 4 m eignet sich besonders gut, um die Fähigkeit der vorgestellten Methode zur Eliminierung von Gebäudeschatten zu demonstrieren.

Nachteilhaft im Vergleich zu den in den vorherigen Beispielen verwendeten Sensoren HyMap, Landsat ETM+ ist bei Ikonos das Fehlen von Kanälen im 1,6 und 2,2$\mu$m Bereich, da diese Kanäle wegen ihrer größeren Sensitivität vorteilhaft für den Schatten-Algorithmus sind. Daher kann bei diesem Sensor nur der nah-infrarote Kanal im Vektor $V_{sh}$ (Gl. (5)) verwendet werden. Dennoch wurden gute Ergebnisse bei der Korrektur der Schatteneffekte erzielt.

Fig.9a zeigt die originale Szene und in Fig.9b ist die entsprechende Szene nach der Korrektur der Gebäudeschatten wiedergegeben. Man erkennt die geringen Kontraste im korrigierten Bild, da die ursprünglichen Schattenbereiche nun dieselbe Helligkeit haben wie die in der Sonne gelegenen Gebiete. Dafür sind aber in den korrigierten Schattenbereichen viele Details sichtbar, die in der originalen Szene verborgen sind.

Diese Szene wurde dem Anmelder DLR von der Firma European Space Imaging als Demonstrationsbild zur Verfügung gestellt (Courtesy of European Space Imaging / Copyright European Space Imaging GmbH).

**Patentansprüche**

1. Verfahren zur Eliminierung von Schatteneffekten in Fernerkundungsdaten über Land, bei welchem unter der Annahme einer vollen solaren Einstrahlung bei der atmosphärischen Korrektur zuerst ein Oberflächen-Reflexionsgrad $\rho_i$ berechnet wird als

$$\rho_i(x,y) = \frac{\pi\left(d^2\{c_0(i)+c_1(i)DN_i(x,y)\}-L_{p,i}\right)}{\tau_i\left(E_{dir,i}+E_{dif,i}\right)}$$

wobei mit $E_{dir}$ und $E_{dif}$ die direkte bzw. diffuse Komponente des globalen Strahlungsflusses auf den Erdboden, mit $DN$ der Grauwert eines Bildpixels, mit $L_p$ gestreutes Luftlicht, mit $\tau$ der Transmissionsgrad der Atmosphäre, mit d der Abstand Erde-Sonne zur Aufnahmezeit des Bildes in astronomischen Einheiten, mit $c_0$ und $c_1$ die radiometrischen Kalibrier-Koeffizienten und mit i der Kanalindex bezeichnet sind, und Wasser- und Wolkenpixel mittels der folgenden spektralen Kriterien maskiert und **dadurch** aus einem Schattenalgorithmus ausgeschlossen werden, und zwar für Wolken:

$$\rho(\lambda = 0,48\ \mu m) \geq 30\% \ \text{und} \ \rho(\lambda = 1,6\ \mu m) \geq 30\%$$

und für Wasser:

$$\rho(\lambda = 0,85\ \mu m) \leq 5\% \ \text{und} \ \rho(\lambda = 1,6\ \mu m) \leq 1\ \%$$

mit folgenden Schritten:

1) eine Kovarianz-Matrix $C(\rho')$ wird berechnet, wobei mit $\rho'$ der Reflexionsgrad-Vektor bezeichnet ist, der nur aus Bildpixeln besteht, die nicht als Wasser und nicht als Wolken klassifiziert sind und es wird eine spezielle vereinfachte Form eines Schatten-Matched-Filter-Vektors $V_{sh}$ angewendet

$$V_{sh} = -\frac{C^{-1}\,\bar{\rho}'}{\bar{\rho}'^T C^{-1}\bar{\rho}'}$$

wobei der Index "$sh$" Schatten symbolisiert, mit $C^{-1}$ die invertierte Kovarianz-Matrix und mit $\bar{\bar{\rho}}'$ das arithmetisch gemittelte Spektrum einer Szene bezeichnet sind und $\bar{\rho}'^T$ der transponierte Vektor $\bar{\rho}'$ ist;

2) durch Anwenden des Schatten-Matched-Filter-Vektors $V_{sh}$ auf den Nicht-Wasser/Nicht-Wolken-Teil der Szene ergibt sich die nicht normierte Schatten-Funktion $\Phi$ zu

$$\Phi(x,y) = V_{sh}^T \left( \rho'(x,y) - \overline{\rho}' \right)$$

wobei durch $\rho'(x,y)$ der Reflexionsgrad des Pixel $(x,y)$ in den Spektralkanälen 0,85, 1,60 und 2,20 $\mu$m als Vektor mit drei Elementen zusammengefasst ist;

3) durch lineares Umskalieren der Werte von $\Phi$ im Bereich $\Phi_{min}$ und $\Phi_{max}$ in ein physikalisch skaliertes Intervall zwischen 0 und 1, wobei 0 keine direkte solare Einstrahlung und somit voller Schatten und 1 volle direkte Einstrahlung bedeuten, werden skalierte Schatten-Funktionen $\Phi^*$ erhalten, nämlich

$$\Phi^* = \frac{\Phi - \Phi_{min}}{\Phi_{max} - \Phi_{min}} \quad \text{,wenn} \quad \Phi \leq \Phi_{max}$$

$$\Phi^* = 1 \quad \text{,wenn} \quad \Phi > \Phi_{max} ;$$

4) um Gebiete mit niedrigen $\Phi$-Werten von mittleren bis hohen $\Phi$-werten zu trennen, wird ein Schwellwert $\Phi_T$ in der Nachbarschaft eines lokalen Histogramm-Minimums $\Phi_1$ gesetzt und damit eine Kern-Schatten-Maske durch Pixel mit $\Phi = (x,y) < \Phi_T$ definiert;

5) um einen fließenden Übergang von Schattenbereichen zu klaren Gebieten zu erzielen, wird die so definierte Kern-Schatten-Maske expandiert;

6) durch Multiplizieren der direkten solaren Einstrahlung $E_{dir}$ mit der skalierten Schatten-Funktion $\Phi^* (x,y)$ wird der Oberflächen-Reflexionsgrad $\rho_i(x,y)$ erhalten als:

$$\rho_i(x,y) = \frac{\pi \left( d^2 \{c_0(i) + c_1(i)DN_i(x,y)\} - L_{p,i} \right)}{\tau_i \left( E_{dir,i} \, \Phi^*(x,y) + E_{dif,i} \right)}$$

**Claims**

1. A method for eliminating shadowing in remote sensing data over land, wherein, assuming full solar irradiation, when performing atmospheric correction, first, a surface reflectance $\rho_i$ is calculated as

$$\rho_i(x,y) = \frac{\pi \left( d^2 \{c_0(i) + c_1(i)DN_i(x,y)\} - L_{p,i} \right)}{\tau_i \left( E_{dir,i} + E_{dif,i} \right)}$$

where $E_{dir}$ and $E_{dif}$ are the direct and the diffuse component of the global radiant flux to the ground, $DN$ is the gray scale value of an image pixel, $L_p$ is scattered light, $T$ is the transmittance of the atmosphere, $d$ is the distance between the earth and the sun at the moment the picture was captured, given in astronomic units, $c_0$ and $c_1$ are the radiometric calibration coefficients, and $i$ is the channel index, and pixels of water and clouds are masked using the following criteria, whereby they are excluded from a shadow algorithm, namely
for clouds:

$$\rho(\lambda = 0.48 \ \mu m) \geq 30\% \text{ and } \rho(\lambda = 1.6 \ \mu m) \geq 30\%$$

and for water:

$$\rho(\lambda = 0.85 \ \mu m) \leq 5\% \ \text{and} \ \rho(\lambda = 1.6 \ \mu m) \leq 1\%,$$

comprising the following steps:

1) calculating a covariance matrix $C(\rho')$, where $\rho'$ is the vector of reflectance formed exclusively by image pixels that are not classified as water or as clouds, and a special simplified form of a shadow matched filter vector $V_{sh}$ is applied:

$$V_{sh} = -\frac{C^{-1} \ \bar{\rho}'}{\bar{\rho}'^{T} C^{-1} \bar{\rho}'}$$

where the index "sh" stands for shadow, $C^{-1}$ is the inverted covariance matrix, and $\bar{\rho}'$ is the averaged spectrum of a scene, and $\bar{\rho}'^{\ T}$ is the transposed vector $\bar{\rho}'$ ;

2) by applying the shadow matched filter vector $V_{sh}$ to the non-water/non-cloud portion of the scene, obtaining the non-normed shadow function $\phi$ as

$$\Phi( x, y ) = V_{sh}^{T} \left( \rho'( x, y ) - \bar{\rho}' \right)$$

where $\rho'(x,y)$ summarizes the reflectance of the pixel $(x, y)$ in the spectral channels 0.85, 1.60 and 2.20 $\mu m$ as a vector with three elements;

3) by linearly rescaling the values of $\phi$ in the range of $\phi_{min}$ and $\phi_{max}$ to a physically scaled interval between 0 and 1, where 0 means no direct solar irradiation, and thus full shadow, and 1 means full direct irradiation, obtaining scaled shadow functions $\Phi^*$, namely

$$\Phi^* = \frac{\Phi - \Phi_{min}}{\Phi_{max} - \Phi_{min}} \ , \text{if} \ \Phi \leq \Phi_{max}$$

$$\Phi^* = 1 \qquad\qquad , \text{if} \ \Phi > \Phi_{max};$$

4) in order to separate areas with low values of $\phi$ from medium to high values of $\phi$, setting a threshold value $\phi_T$ in the vicinity of a local histogram minimum $\phi_1$, thereby defining a core shadow mask by pixels with $\phi = (x, y) < \phi_T$;

5) expanding the core shadow mask thus defined, so as to obtain a smooth transition from shadow portions to clear areas;

6) by multiplying the direct solar irradiation $E_{dir}$ by the scaled shadow function $\phi^* (x,y)$, obtaining the surface reflectance $\rho_i (x,y)$ as

$$\rho_i( x, y ) = \frac{\pi \left( d^2 \{ c_0( i ) + c_1( i ) DN_i( x, y )\} - L_{p,i} \right)}{\tau_i \left( E_{dir,i} \ \Phi^*( x, y ) + E_{dif,i} \right)} \qquad .$$

**Revendications**

1. Procédé d'élimination des effets d'ombre dans des données de télédétection sur le terrain, dans lequel, en supposant un rayonnement solaire incident complet pour la correction atmosphérique, on calcule en premier un facteur de réflexion de surface $\rho_i$ au moyen de l'expression

$$\rho_i(x,y) = \frac{\pi(d^2\{c_0(i) + c_1(i)DN_i(x,y)\} - L_{p,i})}{\tau_i(E_{dir,i} + E_{dif,i})}$$

où $E_{dir}$ et $E_{dif}$ sont la composante directe ou diffuse du flux de rayonnement global sur le sol, $DN$ est la valeur de gris d'un pixel d'image, $L_p$ est la lumière dispersée de l'air, $\tau$ est le facteur de transmission de l'atmosphère, $d$ est la distance de la Terre au Soleil en unités astronomiques au moment de l'acquisition de l'image, $c_0$ et $c_1$ sont les coefficient d'étalonnage radiométrique et $i$ est l'indice du canal, et on masque les pixels de l'eau et des nuages au moyen des critères spectraux ci-après afin de les exclure ainsi d'un algorithme d'ombre, à savoir pour les nuages :

$$\rho\ (\lambda = 0,48\ \mu m)\ \geq 30\%\ \text{et}\ \rho\ (\lambda = 1,6\ \mu m)\ \geq 30\%$$

et pour l'eau :

$$\rho\ (\lambda = 0,85\ \mu m)\ \leq 5\%\ \text{et}\ \rho\ (\lambda = 1,6\ \mu m)\ \leq 1\%$$

ledit procédé comprenant les étapes suivantes :

1) On calcule une matrice de covariance $C(\rho')$, où $\rho'$ désigne le vecteur de facteur de réflexion, qui se compose uniquement de pixels qui ne sont pas classés comme des pixels d'eau ni comme des pixels de nuages et on utilise une forme simplifiée spéciale d'un vecteur de filtre d'ombre accordé $V_{sh}$

$$V_{sh} = \frac{C^{-1}\ \bar{\rho}'}{\bar{\rho}'^T\ C^{-1}\bar{\rho}'}$$

où l'indice *"sh"* symbolise l'ombre, $C^{-1}$ est la matrice de covariance inverse, $\bar{\rho}'$ est le spectre d'une scène en moyenne arithmétique et $\bar{\rho}'^T$ est le vecteur $\bar{\rho}'$ transposé ;
2) En appliquant le vecteur de filtre d'ombre accordé $V_{sh}$ à la partie non eau/non nuage de la scène, on obtient la fonction d'ombre normée $\Phi$, donnée par l'expression

$$\Phi(x,y) = V_{sh}^T\ (\rho'(x,y) - \bar{\rho}')$$

où $\rho'(x,y)$ représente le facteur de réflexion du pixel $(x,y)$ dans les canaux spectraux 0,85, 1,60 et 2,20 $\mu m$ sous la forme d'un vecteur à trois éléments ;
3) Par un recadrage linéaire des valeurs de $\Phi$ dans le domaine $\Phi_{min}$ et $\Phi_{max}$ dans un intervalle physiquement échelonné entre 0 et 1, où 0 correspond à l'absence de rayonnement solaire direct, c'est-à-dire à l'ombre totale, et 1 correspond à un rayonnement solaire total, on obtient des fonctions d'ombre cadrées $\Phi$ *, soit

$$\Phi^* = \frac{\Phi - \Phi_{min}}{\Phi_{max} - \Phi_{min}} \text{ lorsque } \Phi \leq \Phi_{m\prime}$$

$$\Phi^* = 1 \text{ lorsque } \Phi > \Phi_{max} \text{ ;}$$

4) Pour séparer les zones à valeur de $\Phi$ faibles de celles à valeurs de $\Phi$ moyennes à élevées, on fixe une valeur seuil $\Phi_T$ au voisinage d'un minimum d'histogramme local $\Phi_1$ et on définit ainsi un masque d'ombre pure par des pixels avec $\Phi = (x,y) < \Phi_T$ ;

5) Pour obtenir une transition continue des zones d'ombres aux zones claires, on étend le masque d'ombre pure ainsi défini ;

6) En multipliant le rayonnement solaire direct $E_{dir}$ par la fonction d'ombre cadrée $\Phi^*(x,y)$, on obtient le facteur de réflexion de surface $\rho_i(x,y)$, donné par l'expression :

$$\rho_i(x,y) = \frac{\pi(d^2\{c_0(i) + c_1(i)DN_i(x,y)\} - L_{p,i})}{\tau_i(E_{dir,i} \; \Phi^*(x,y) + E_{dif,i})}$$

| Boden-Reflexionsgrad (Gl. 1) |
|---|

↓

| Ausschluß Wasser & Wolken (Gl. 2,3) |
|---|

↓

1 — | Matched Filter Vektor (Gl. 5) |

↓

2 — | unskalierte Schatten-Fkt. $\Phi$ (Gl. 6) | ⟹

↓

3 — | skalierte Schatten-Fkt. $\Phi^*$ (Gl. 7) |

↓

4 — | Schwelle $\Phi_T$ : Kern-Schatten Gebiete | ⟹

↓

5 — | Schatten-Maske expandieren | ⟹

↓

6 — | Schatten eliminieren mit $\Phi^*$ (Gl. 8) |

Szene

Kern

## Fig.1

obere Kurve: Sichtweite 50 km

untere Kurve: Sichtweite 23 km

Fig.2

Fig.3

EP 1 653 193 B1

Fig.4a          Fig.4b          Fig.4c

# Fig.5a

# Fig.5b

# Fig.5c

Fig.6a

Fig.6b

Fig.6c

Fig.7

Fig.8b

Fig.8a

Fig.9a

Fig.9b

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1091188 A1

**In der Beschreibung aufgeführte Nicht-Patentliteratur**

- **SIMPSON, J. J. ; STITT, J. R.** A procedure for the detection and removal of cloud shadow from AVHRR data over land. *IEEE Trans. Geoscience and Remote Sensing,* 1998, vol. 36, 880-897
- **BOARDMAN, J. W.** Automated spectral unmixing of AVIRIS data using convex geometry concepts. *Summaries of Fourth JPL Airborne Geoscience Workshop,* 1993, vol. 1, 11-14
- **ADLER-GOLDEN, S.M. et al.** An algorithm for de-shadowing spectral imagery. *Proc. 11th JPL Airborne Earth Science Workshop,* 2002
- **RICHTER, R.** A spatially adaptive fast atmospheric correction algorithm. *Int. J. Remote Sensing,* 1996, vol. 17, 1201-1214
- **RICHTER, R.** Correction of atmospheric and topographic effects for high spatial resolution satellite imagery. *INT. J. Remote Sensing,* 1997, vol. 18, 1099-1111